# EUROPEAN PATENT SPECIFICATION

(11) **EP 3 473 500 B1**
(45) Date of publication and mention of the grant of the patent: **14.10.2020**
(21) Application number: 18211879.4
(22) Date of filing: 01.02.2016
(51) Int. Cl.: B60R 21/232, B60R 21/213, B60R 21/2338

(54) **INSTALLATION STRUCTURE OF CURTAIN AIRBAG**
INSTALLATIONSSTRUKTUR EINES VORHANGAIRBAGS
STRUCTURE D'INSTALLATION D'AIRBAG RIDEAU

(30) Priority: 05.03.2015 JP 2015043240
(43) Date of publication of application: 24.04.2019
(62) Divisional of application: 16758695.7
(73) Proprietor: Autoliv Development AB, 447 83 Vårgårda (SE)
(72) Inventor: INOUE, Kazuhiro, Yokohama-shi, Kanagawa 222-8580 (JP); YOSHIDA, Yuichiro, Yokohama-shi, Kanagawa 222-8580 (JP); NAKAMOTO, Kenta, Yokohama-shi, Kanagawa 222-8580 (JP)
(74) Representative: Müller Verweyen

(56) References cited:
- JP-A- 2000 296 754
- JP-A- 2004 338 439
- JP-B2- 5 042 192

## Description

### [Technical Field]

The present invention relates to an installation structure of a vehicle curtain airbag, with which a strap can be prevented from being caught on a front pillar garnish and the front pillar garnish can be prevented from breaking when the strap is pulled out as a result of deployment and inflation of a curtain airbag main body, and thus an occupant can be protected with high safety.

### [Background Art]

PTL 1 and 2 are known as documents disclosing structures for holding, on a vehicle body, a strap that connects a curtain airbag main body and a front pillar, when the curtain airbag main body in a stored state is attached to the vicinity of a roof side rail of the vehicle body.

The object of the "structure of vehicle body pillar trim adaptable for a curtain air bag system" of PTL 1 is to provide a structure for reducing the costs and stabilizing the quality of a pillar trim structure, without impairing drawability of a curtain airbag strap upon deployment of a curtain airbag. A trim cover and an energy absorption rib are molded integrally, the airbag strap is accommodated in a gap between a rib end portion and a pillar, and a slit extending from the end portion of the rib on the vehicle body pillar side up to the inner face of the trim cover, is provided in a substantially central section of the rib, in the thickness direction of thereof, such that, as the curtain airbag deploys during for instance a vehicle collision, the slit is widened by the airbag strap on account of the deployment force of the curtain airbag; as a result, the airbag strap is pulled out towards a given position or another position, while pushing and spreading the trim cover integrally molded with the rib, forming thereby an opening, and the airbag deploys in the form of a curtain on the side of the vehicle interior.

In PTL 1 the airbag strap is held on the vehicle body just by being accommodated in a gap between a pillar and an end portion of an energy absorption rib. By virtue of the deployment action of the curtain airbag, the strap is pulled out immediately towards the interior of the vehicle, from the opening (gap between door finisher and trim cover) that is formed as a result of widening of the slit that extends from the end portion of the rib, on the vehicle body pillar side, towards the inner face of the trim cover.

The object of the "occupant protective device" of PTL 2 is to provide an occupant protection device in which a strap or the like of an airbag is pulled out reliably, by relying on a simple configuration. A strap is held, by a clip, in the interior of a pillar, the clip being fixed in such a manner that an upper fold-back portion at a holding portion of the clip straddles a boundary between a pillar trim and a head lining; as a result, the strap is prevented from coming in contact with the upper end of the pillar trim when the strap is pulled out as a result of deployment of the airbag.

In PTL 2, the upper end of the pillar trim is blocked from the strap by the clip, and accordingly the strap does not come in contact with the upper end of the pillar trim. The clip holds the strap in a neutral manner with respect to the interior and the exterior of the cabin. JP5042192B2 discloses an installation structure of a vehicle curtain airbag according to the preamble of claim 1

### [Citation List]

### [Patent Literature]

[PTL 1] Japanese Patent Application Publication No. 2001-213255
[PTL 2] Japanese Patent Application Publication No. 2004-338439

### [Summary of Invention]

### [Technical Problem]

The strap that connects the curtain airbag main body and the front pillar extends from a roof side rail along the front pillar of a pillar or the like, as disclosed in the Patent Literature documents above. The strap is covered by a front pillar garnish, such as a trim cover and a pillar trim, which is disengageably mounted to the front pillar side.

During deployment and inflation of the curtain airbag main body, the resulting deployment force is exploited to disengage the front pillar garnish from the front pillar, whereupon the strap is pulled out into the vehicle body (into the cabin) through the gap that becomes formed through disengagement of the front pillar garnish. The strap may become caught on the front pillar garnish when being pulled out through the gap, whereupon the front pillar garnish may be conceivably destroyed as the strap is further pulled out while in a caught state.

In particular, the strap passes a joint position of a roof garnish that covers the roof side rail and the front pillar garnish that covers the front pillar. Accordingly, there is a high risk of catching the strap on the front pillar garnish at this joint position.

A further problem arises in that the front pillar garnish is provided facing into the vehicle body, and accordingly the occupant cannot not be protected safely enough upon breaking of the front pillar garnish facing towards the interior of the vehicle body.

The present invention has been contrived in view of the above conventional problems, and its object is to provide and an installation structure of a vehicle curtain airbag, with which a strap can be prevented from being caught on a front pillar garnish and the front pillar garnish can be prevented from breaking when the strap is pulled out as a result of deployment and inflation of a curtain airbag main body, and thus an occupant can be protected with high safety.

### [Solution to Problem]

An installation structure of a vehicle curtain airbag according to the present invention utilizes a holding member that disengageably holds a strap which connects an end portion of a curtain airbag main body to a pillar of a vehicle body, and that can be attached to the vehicle body while holding the strap, the holding member including: a slope oriented towards the exterior and the bottom of the vehicle body when attached to the vehicle body; wherein the strap can be held on a top face of the slope, with the curtain airbag main body in a stored state; and the slope allows guiding, towards the exterior of the vehicle body, the strap moving in response to deployment and inflation of the curtain airbag main body. A holding member of a curtain airbag strap and includes: a vehicle body including a front pillar and a roof side rail connected to the front pillar; a front pillar garnish provided in the front pillar so as to cover the front pillar from inside the vehicle body, and having a first locking edge section disengageably locked to the front pillar; a roof garnish provided in the roof side rail so as to cover the roof side rail from inside the vehicle body, and having a second locking edge section which, in a form connected to the first locking edge section, is disengageably locked to the roof side rail; a curtain airbag main body, provided in a stored state between the roof garnish and the roof side rail, and being capable of deploying and inflating towards the bottom of the vehicle body through disengagement of the second locking edge section from the roof side rail; and a strap that extends along the front pillar, between the front pillar and the front pillar garnish, from a front portion, in a vehicle body front-rear direction, of the curtain airbag main body in a stored state, the strap connecting the curtain airbag main body and the front pillar, wherein the strap is disengageably held by the holding member which can be attached to the vehicle body while being positioned at a position covered by at least one of the front pillar garnish and the roof garnish.

Preferably, locking between the front pillar and the first locking edge section of the front pillar garnish is oriented towards the exterior of the vehicle body.

Preferably, an end of the slope is positioned in the vicinity of the first locking edge section or of the second locking edge section. Preferably, the holding member is provided at a joint position of the roof garnish and the front pillar garnish, or in the vicinity of the joint position.

### [Advantageous Effects of Invention]

According to the holding member of a curtain airbag strap, vehicle curtain airbag device and installation structure of a vehicle curtain airbag according to the present invention, a strap can be prevented from being caught on a front pillar garnish and the front pillar garnish can be prevented from breaking when the strap is pulled out as a result of deployment and inflation of a curtain airbag main body, and thus an occupant can be protected with high safety.

### [Brief Description of Drawings]

Fig. 1 is a side-view diagram illustrating a preferred embodiment of the holding member of a curtain airbag strap, vehicle curtain airbag device and installation structure of a vehicle curtain airbag according to the present invention.
Fig. 2 is a look-up diagram illustrating the holding member of a curtain airbag strap, vehicle curtain airbag device and installation structure of a vehicle curtain airbag, depicted in Fig. 1, as viewed from below.
Fig. 3 is a cross-sectional diagram of Fig. 1 viewed along line arrow A-A.
Fig. 4 is a set of diagrams for explaining the holding member of a curtain airbag strap illustrated in Fig. 1, where Fig. 4(A) is a front-view diagram, Fig. 4(B) is a partial cutaway side-view diagram, Fig. 4(C) is bottom-view diagram and Fig. 4(D) is a rear-view diagram.
Fig. 5 is a set of diagrams for explaining a variation of the holding member illustrated in Fig. 4, where Fig. 5(A) is a front-view diagram and Fig. 5(B) is a bottom-view diagram.

### [Description of Embodiments]

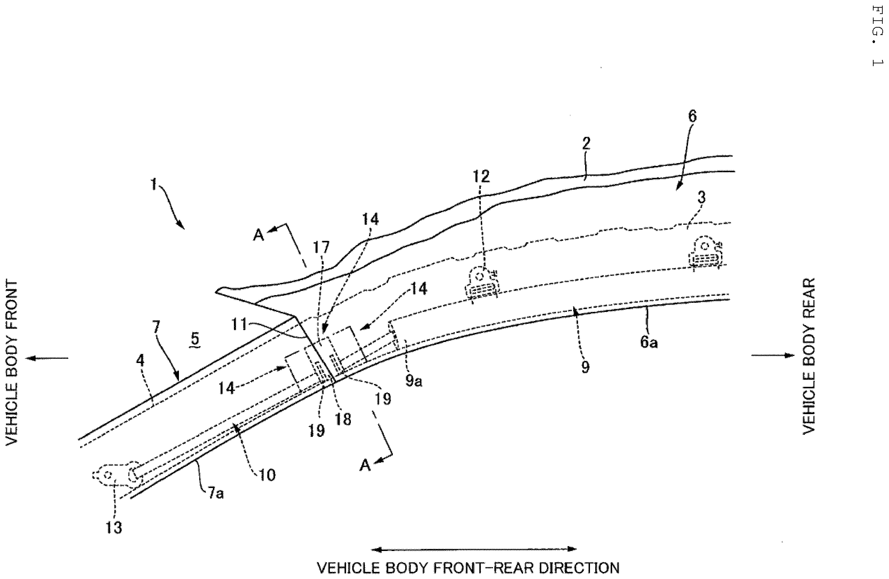

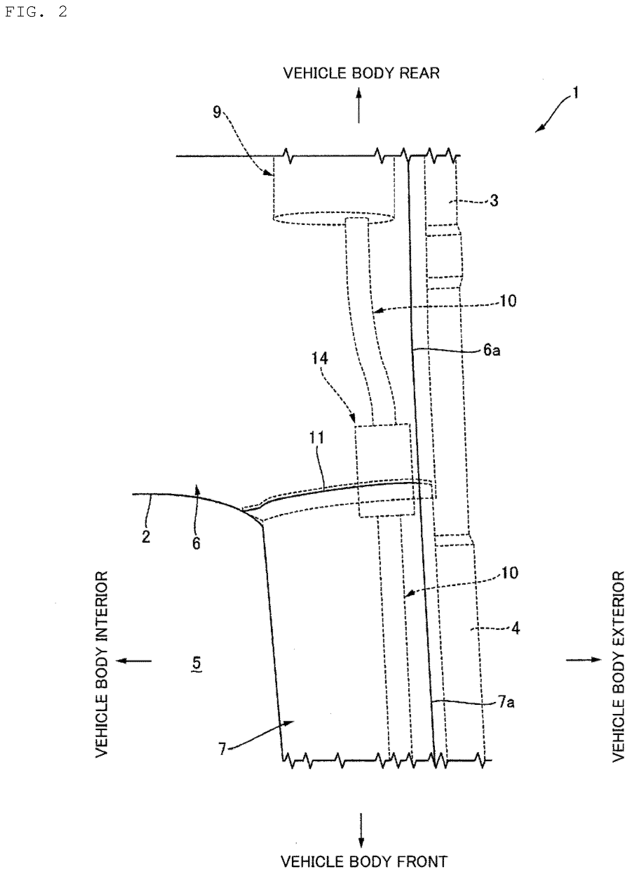

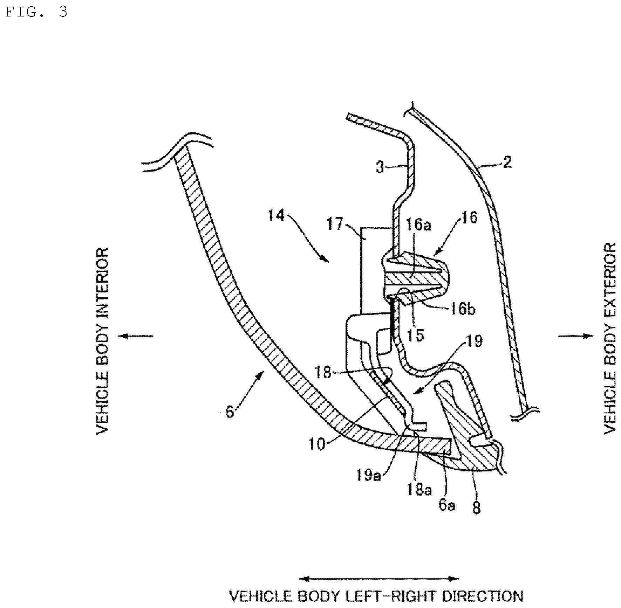

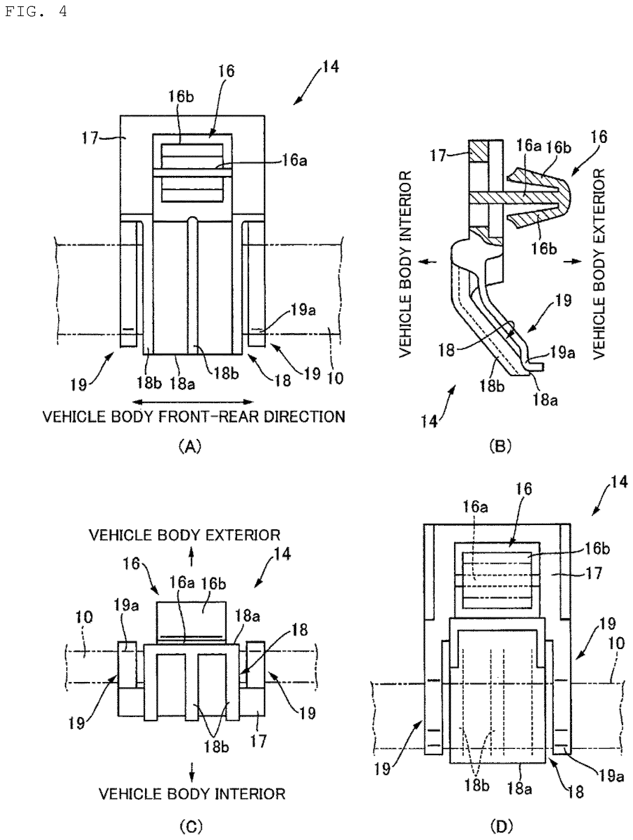

Preferred embodiments of the holding member of a curtain airbag strap, vehicle curtain airbag device and installation structure of a vehicle curtain airbag according to the present invention will be explained next in detail with reference to accompanying drawings. Fig. 1 is a side-view diagram illustrating a holding member of a curtain airbag strap, a vehicle curtain airbag device and an installation structure of a vehicle curtain airbag according to the present embodiment; Fig. 2 is a look-up diagram illustrating the holding member of a curtain airbag strap, vehicle curtain airbag device and installation structure of a vehicle curtain airbag, depicted in Fig. 1, as viewed from below; Fig. 3 is a cross-sectional diagram of Fig. 1 viewed along line arrow A-A; and Fig. 4 is a set of diagrams for explaining the holding member of a curtain airbag strap illustrated in Fig. 1, where Fig. 4(A) is a front-view diagram, Fig. 4(B) is a partial cutaway side-view diagram, Fig. 4(C) is bottom-view diagram and Fig. 4(D) is a rear-view diagram. Herein, Fig. 1 to Fig. 3 are diagrams corresponding to the surroundings of a driver's seat of a right-hand drive car.

In the explanation below, the terms "top", "bottom", "right", "left", "front" and "rear" denote respectively an upward direction, a downward direction, a rightward direction, a leftward direction, a frontward direction in the travel direction and a rearward direction in the travel direction, referenced to the vehicle body. Further, the terms "outside" and "inside" denote a direction viewed from the middle of the vehicle body towards the exterior, and a direction viewed from the exterior of the vehicle body into the vehicle interior, respectively.

The vehicle body structure around the front seats of a vehicle body 1 is a known structure, mainly configured of, for instance, a roof panel 2 that makes up a roof, roof side rail 3 disposed on both edges of the roof panel 2, in the vehicle body left-right direction, and front pillars 4 disposed substantially obliquely towards the front in the vehicle body front-rear direction, from respective roof side rails 3, as illustrated in Fig. 1 to Fig. 3. The front pillars 4 and the roof side rails 3 are disposed so as to be connected in the vehicle body front-rear direction.

A front windshield 5 is provided over the dashboard, from the roof panel 2. The region extending from each roof side rail 3 over to the respective front pillar 4 is partitioned from the outside of the vehicle body 1 by a respective front door. A respective roof garnish 6 is provided, as a decorative member, in the roof panel 2 and the roof side rail 3, so as to cover the roof panel 2 and the roof side rail 3 from inside the vehicle body 1. Similarly, a respective front pillar garnish 7 is provided in each front pillar 4, so as to cover the latter from inside the vehicle body 1.

An edge portion of the roof garnish 6, in the vehicle body left-right direction, extends along the vehicle front-rear direction. As illustrated in Fig. 3, this edge portion constitutes a second locking edge section 6a that is disengageably locked to the roof side rail 3 by an opening trim 8 that is provided on the roof side rail 3 side.

As described below, the second locking edge section 6a becomes disengaged from the opening trim 8 as a result of the roof garnish 6 being pressed on account of the deployment and inflation action of the curtain airbag main body 9. Through disengagement of the second locking edge section 6a from the roof side rail 3, the curtain airbag main body 9 deploys and inflates inside the vehicle body 1 towards the bottom of the vehicle body 1.

Similarly, the edge portion of the front pillar garnish 7, in the vehicle body left-right direction, extends along the lengthwise direction of the front pillar 4; this edge portion constitutes a first locking edge section 7a that is disengageably locked to the front pillar 4 by an opening trim that is provided on the front pillar 4 side.

As described below, the first locking edge section 7a of the front pillar garnish 7 becomes disengaged from the opening trim, through the action of a strap 10 that is caused to move and be pulled out through tensioning in response to deployment and inflation of the curtain airbag main body 9. Disengagement of the first locking edge section 7a from the front pillar 4 causes the strap 10 to become stretched between the front pillar 4 and the deployed and inflated curtain airbag main body 9, inside the vehicle body 1.

In the front pillar garnish 7, the first locking edge section 7a is set on the outward side of the vehicle body 1, not on the inward side of the vehicle body 1. Locking between the first locking edge section 7a and the front pillar 4 is oriented towards the exterior of the vehicle body 1 in such a manner that when the first locking edge section 7a becomes disengaged from the front pillar 4, the gap that arises on account of the resulting separation of the foregoing two is oriented towards the exterior of the vehicle body 1.

The first locking edge section 7a and the second locking edge section 6a are disposed connected to each other from the front pillar 4 over to the roof side rail 3, while being serially disengageable from the foregoing, so that the curtain airbag main body 9 and the and strap 10 are disposed serially contiguous to each other inside the vehicle body 1. Therefore, the front pillar garnish 7 and the roof garnish 6 are provided serially contiguous to each other via a joint 11 to which the foregoing are connected.

In this configuration, also the second locking edge section 6a in the roof garnish 6 is set on the outward side of the vehicle body 1, not on the inward side of the vehicle body 1. Accordingly, locking between the second locking edge section 6a and the roof side rail 3 is oriented towards the exterior of the vehicle body 1 in such a manner that when the second locking edge section 6a becomes disengaged from the roof side rail 3, the gap that arises on account of the resulting separation of the foregoing two is oriented towards the exterior of the vehicle body 1.

The curtain airbag is configured by including: the curtain airbag main body 9 provided such that the lengthwise direction thereof runs along the vehicle body front-rear direction; mounting tabs 12 for mounting and supporting the curtain airbag main body to the roof side rail 3; the strap 10 extending from a front portion (front end) 9a of the curtain airbag main body 9 and being connected to the curtain airbag main body 9 and the front pillar 4 such that the deployment and inflation behavior of the curtain airbag main body 9 inside the vehicle body 1 is controlled by the strap 10; and a connecting tab 13 for connection and fixing of the strap 10 to the central section or the lower end side of the obliquelydisposed front pillar 4.

The curtain airbag main body 9, in a stored state, is attached to the roof side rail 3 via the mounting tabs 12, in the vicinity of the roof side rail 3, specifically between the roof side rail 3 and the roof garnish 6 that covers the latter, the curtain airbag main body 9 being thus provided concealed by roof garnish 6.

The strap 10 extends from the space between the roof side rail 3 and the roof garnish 6 over to the space between the front pillar 4 and the front pillar garnish 7, along the front pillar 4 from the front portion 9a, in the vehicle body front-rear direction, of the curtain airbag main body 9 in a stored state, the strap 10 being connected to the front pillar 4 via the connecting tab 13, and being provided concealed by the front pillar garnish 7 and the roof garnish 6.

As described above, the front pillar garnish 7 and the roof garnish 6 are disengageable from the front pillar 4 and the roof side rail 3 by way of the first and second locking edge sections 6a, 7a. As a result, the curtain airbag main body 9 is provided so as to be capable of deploying and inflating, from the stored state, towards the bottom of the vehicle body, while the strap 10 as well is provided so as to be pulled out from the garnishes 6, 7.

A holding member 14 for disengageably holding the strap 10, with the curtain airbag main body 9 in a stored state, is provided in the vehicle body 1. The holding member 14 is configured to be attachable to the vehicle body 1, while holding the strap 10. Specifically, the holding member 14 can hold the strap 10 when the holding member 14 is attached to the vehicle body 1. In the present embodiment the holding member 14 is provided on the front pillar 4 or the roof side rail 3 while being positioned at a position covered by the front pillar garnish 7 and the roof garnish 6. The holding member 14 may be provided at a position covered by either one of the front pillar garnish 7 and the roof garnish 6.

In further detail, the holding member 14 is provided at the position of the joint 11 between the roof garnish 6 and the front pillar garnish 7, or in the vicinity of that position. In the illustrated example, the holding member 14 is attached to the roof side rail 3, so as to be positioned at the position of the joint 11.

However, the holding member 14 may be attached to the front pillar 4, so as to be positioned at the position of the joint 11. If the holding member 14 stands in the vicinity of the position of the joint 11, then the holding member 14 may be attached to the roof side rail 3, closer to the roof side rail 3 than the position of the joint 11; Alternatively, the holding member 14 may be attached to the front pillar 4, closer to the front pillar 4 than the position of the joint 11, as denoted by the imaginary lines in Fig. 1.

As illustrated in Fig. 3 and Fig. 4, the holding member 14 is configured of a mounting base 17 having an engaging portion 16 for engagement through insertion into a mounting hole 15 that is formed in the roof side rail 3; a slope 18 extending downward from the mounting base 17; and a pair of pressing bodies 19 positioned on either side of the slope 18, and extending downward from the mounting base 17. Fig. 4(A) is a front-view diagram in which the holding member 14 is viewed from the interior of the vehicle body 1.

The holding member 14 is configured through integral formation of the mounting base 17 having the engaging portion 16, the slope 18 and the pressing bodies 19. The holding member 14 may be made of a synthetic resin or a metal. The mounting base 17 is formed to a substantially rectangular frame shape, the front face of which is oriented towards the exterior of the vehicle body 1, while the back surface of which is oriented towards the interior of the vehicle body 1.

The engaging portion 16 is made up of: an insertion projection 16a, the base end of which is joined to the mounting base 17, while the tip of which protrudes horizontally outward from the surface of the mounting base 17; and a stopper 16b formed at the tip of the insertion projection 16a and having a U-shaped cross-section, such that the stopper 16b deforms elastically so as to become narrower.

When the insertion projection 16a of the engaging portion 16 is inserted into the mounting hole 15, the stopper 16b passes through the mounting hole 15 while undergoing elastic deformation, on account of mounting hole 15, so as to become narrower, after which the stopper 16b undergoes elastic recovery and engages with the mounting hole 15. The mounting base 17 of the holding member 14 becomes mounted and fixed to the roof side rail 3 as a result.

The slope 18 is formed so as to be oriented towards the exterior and the bottom of the vehicle body 1, when attached to the vehicle body 1. In other words, the slope 18 is formed so that the downward slant thereof is oriented towards the exterior of the vehicle body 1. Accordingly, the slope 18 is formed, in a state where the holding member 14 is mounted to the vehicle body 1, such that the slant of the slope 18 is oriented towards the exterior of the vehicle body 1, jutting towards the exterior of the vehicle body 1 beyond the surface of the mounting base 17.

Further, in the slope 18, when the mounting base 17 is mounted and fixed to the roof side rail 3, a lower end portion 18a that constitutes the end of the downward slant becomes positioned in the vicinity of the second locking edge section 6a of the roof garnish 6, so as to face or oppose the second locking edge section 6a, as illustrated in Fig. 3. In a case where the holding member is mounted and fixed to the front pillar, the lower end portion 18a of the slope 18 becomes positioned in the vicinity of the first locking edge section 7a of the front pillar garnish 7 in such a way so as to face or oppose the first locking edge section 7a.

With the curtain airbag main body 9 in a stored state, the strap 10 extending from the roof side rail 3 towards the front pillar 4 holdably abuts the top face of the slope 18. The slope 18 allows guiding, towards the exterior of the vehicle body 1, the strap 10 that is displaced in response to deployment and inflation of the curtain airbag main body 9 and which causes the first locking edge section 7a of the front pillar garnish 7, set on the outward side of the vehicle body 1, to disengage from the front pillar 4.

For the purpose of reinforcement so as to preclude deformation, such as deflection caused by the strap 10 moving in a slanting direction, the slope 18 has formed thereon a plurality of reinforcing ribs 18b along the slanting direction of the slope 18, the reinforcing ribs 18b being positioned on the back surface side of the mounting base 17.

The pressing bodies 19 are provided parallel to the slope 18, adjacent to the slope 18, in that base ends of the pressing bodies 19 are joined to the mounting base 17, while the tips are formed to an arm shape that extends up to the vicinity of the lower end portion 18a of the slope 18. The armlike pressing bodies 19 are formed so as to be elastically pliable and deformable, with the mounting base 17 side as a fulcrum.

By virtue of that elasticity, the strap 10 abutting the slope 18 is pressed from above, towards the slope 18, by the pressing bodies 19. Specifically, the strap 10 dives under the pressing bodies 19 and abuts the adjacent slope 18, as a result of which the strap 10 is pushed down by the pressing bodies 19 on both sides of the slope 18, and is brought into pressure contact with the slope 18.

Locking portions 19a for positioning the strap 10 on the slope 18 are provided at the tip sides of the pressing bodies 19, through curving of the tips towards the slope 18 such that the locking portions 19a are disengageably locked to the strap 10, on the slope 18, on account of the elasticity of the pressing bodies 19.

An explanation follows next on the operation of the holding member of a curtain airbag strap, the vehicle curtain airbag device and the installation structure of a vehicle curtain airbag according to the present embodiment. The holding member 14 is mounted and fixed beforehand to the roof side rail 3, by way of the engaging portion 16. Prior to the operation of curtain airbag, the curtain airbag main body 9, in a stored state, is supported and fixed to the roof side rail 3 via the mounting tabs 12.

The strap 10 is provided along the front pillar 4, from the roof side rail 3, and is connected and fixed to the front pillar 4 via the connecting tab 13. The strap 10 is positioned on the slope 18 by the locking portions 19a of the holding member 14, at the position of the joint 11 between the front pillar garnish 7 and the roof garnish 6, the strap 10 being brought into pressure contact with the slope 18 by being pressed by the pressing bodies 19.

When the curtain airbag is operated, the curtain airbag main body 9 presses against the roof garnish 6 on account of the deployment and inflation action of the curtain airbag main body 9, and causes the second engaging edge section 6a to disengage from the opening trim 8 of the roof side rail 3. As a result of this disengagement, the curtain airbag main body 9 pops out from between the roof garnish 6 and the roof side rail 3 and deploys and inflates, inside the vehicle body 1, towards the bottom of the vehicle body.

The strap 10 starts to move in response to the deployment and inflation action of the curtain airbag main body 9. The strap 10 is connected and fixed for instance to the central section of the front pillar 4, and the curtain airbag main body 9 is deployed and inflated downward from the roof side rail 3 above the connection fixing position. Accordingly, a downward force acts on the strap 10, on the slope 18 of the holding member 14. The strap 10 is guided on the slope 18 by this downward force, and is displaced downward and towards the exterior of the vehicle body 1.

The lower end portion 18a of the slope 18 is positioned in the vicinity of the second locking edge section 6a of the roof garnish 6. As the strap 10 having reached the lower end portion 18a is guided by the slope 18, the roof garnish 6 is therefore pressed towards the exterior of the vehicle body 1, and the second engaging edge section 6a becomes disengaged from the opening trim 8 of the roof side rail 3, at the joint position 11. As a result of this disengagement the strap 10 is pulled out towards the exterior of the vehicle body 1 from between the roof garnish 6 and the roof side rail 3.

In parallel with this, at the front pillar 4 the strap 10 presses the front pillar garnish 7 towards the exterior of the vehicle body 1, and causes the first engaging edge section 7a to disengage from the opening trim of the front pillar 4. As a result of this disengagement, the strap 10 becomes pulled out towards the exterior of the vehicle body 1, from between the front pillar garnish 7 and the front pillar 4.

Thereafter, the strap 10 is tensioned by the curtain airbag main body 9 having deployed and inflated inside the vehicle body 1, and is thereby stretched inside the vehicle body 1.

The first locking edge section 7a and the second locking edge section 6a are set on the outward side of the vehicle body 1, at the front pillar garnish 7 and the roof garnish 6. Locking between the first locking edge section 7a and the front pillar 4, and locking between the second locking edge section 6a and the roof side rail 3, are oriented towards the exterior of the vehicle body 1 in such a manner that when the locking edge sections 6a, 7a become disengaged from the front pillar 4 and the roof side rail 3, the gaps that arise through separation of the foregoing are oriented towards the exterior of the vehicle body 1. As a result, the strap 10 is further pulled out smoothly towards the exterior of the vehicle body 1.

According to the holding member of a curtain airbag strap, vehicle curtain airbag device and installation structure of a vehicle curtain airbag according to the present embodiment as explained above, the holding member 14 of a curtain airbag strap that disengageably holds the strap 10 which connects the front portion 9a of the curtain airbag main body 9 to the front pillar 4 of the vehicle body 1, and that can be attached to the strap 10 to the vehicle body 1 while holding the strap 10, has the slope 18 that is oriented towards the exterior of the vehicle body 1 and towards the bottom of the vehicle body 1, when attached to the vehicle body 1; the holding member 14 can hold the strap 10 on the top face of the slope 18, with the curtain airbag main body 9 in a stored state; and the slope 18 allows guiding, towards the exterior of the vehicle body 1, the strap 10 moving in response to deployment and inflation of the curtain airbag main body 9. Further, the vehicle curtain airbag device and the installation structure of a vehicle curtain airbag are configured by being provided with the holding member 14 of a curtain airbag strap. Therefore, when the strap 10 is pulled out as a result of deployment and inflation of the curtain airbag main body 9, the strap 10 is guided, by the slope 18, towards the exterior of the vehicle body 1; this allows hindering the movement the strap 10 towards the interior of the vehicle body 1 (towards the occupant) between the front pillar garnish 7 and the front pillar 4, and preventing the strap 10 from being caught on for instance the front pillar garnish 7 that faces an occupant seated on a seat. As a result, it becomes possible to prevent breaking for instance in that the front pillar garnish 7 flies apart into the vehicle body 1, and to protect the occupant with high safety.

The roof side rail 3 and the front pillar 4 are covered, from inside the vehicle body 1, by the roof garnish 6 and the front pillar garnish 7, respectively, which are provided disengageably locked to the foregoing; as a result, it becomes possible to secure smooth pop-out of the curtain airbag main body 9 from the roof garnish 6, while rendering pull-out of the strap 10 from the front pillar garnish 7 smoother, and rendering the pull-out operation smoother. Breaking of the front pillar garnish 7 by the strap 10 can be properly prevented as a result.

In further detail, the first locking edge section 7a of the front pillar garnish 7 is caused to disengage from the front pillar 4 by the strap 10, the motion of which towards the exterior of the vehicle body 1 is guided by the slope 18. Therefore, it becomes possible to significantly suppress catching of the strap 10 on the front pillar garnish 7.

At least the lock between the front pillar 4 and the first locking edge section 7a of the front pillar garnish 7 is oriented towards the exterior of the vehicle body 1. Accordingly, locking between the roof side rail 3 and the second locking edge section 6a of the roof garnish 6 is preferably oriented towards the exterior of the vehicle body 1, as a result of which the strap 10 that is guided by the slope 18 is pulled out reliably towards the exterior of the vehicle body 1, when the strap 10 is pulled out from the front pillar garnish 7 and so forth, without catching of the strap 10 on the front pillar garnish 7, in the interior of the vehicle body 1 facing the occupant seated on the seat. In consequence this allows both preventing breaking of the front pillar garnish 7 and preventing such a breaking from occurring towards the interior of the vehicle body 1, whereby the occupant can be protected with high safety.

In the present embodiment, the lower end portion 18a being one end of the slope 18 is positioned in the vicinity of the second locking edge section 6a of the roof garnish 6. Accordingly, the strap 10 does not cause breaking of the roof garnish 6, and hence of the front pillar garnish 7, by moving to a site other than the second locking edge section 6a, and the pull-out action of the strap 10 can be secured through accurate disengagement of the second locking edge section 6a from the roof side rail 3, prompted by the strap 10. Needless to say the same effect is obtained in a case where the holding member 14 is installed on the front pillar 4.

The holding member 14 is provided at the position of the joint 11 between the roof garnish 6 and the front pillar garnish 7, or in the vicinity of that position. Therefore, the holding member 14 allows restricting the movement direction of the strap 10 to a direction in which the strap 10 is less likely to be caught, at the position of the joint 11 or in the vicinity thereof, where the strap 10 is likely to become caught on the front pillar garnish 7. In turn, this allows precluding breaking of the front pillar garnish 7 caused by catching of the strap 10.

The holding member 14 is provided with the pressing bodies 19, adjacent to the slope 18, for pressing and bringing the strap 10 into pressure contact with the slope 18. As a result, the strap 10 can be held at all times on the slope 18 by the pressing bodies 19, the strap 10 can be prevented from coming off the slope 18, on account of positional deviation, for instance during travel of the vehicle body 1, and there can be increased the operational reliability of the strap 10 obtained by virtue of the holding member 14.

The pressing bodies 19 are provided with the locking portions 19a, disengageably locked to the strap 10, for positioning the strap 10 on the slope 18. Accordingly, it becomes possible to increase installation workability through the locking action of the locking portions 19a upon attachment of the strap 10 to the holding member 14 during installation of the curtain airbag in the vehicle body 1, and it becomes possible to reliably hold the strap 10 on the slope 18 at all times, in conjunction with the pressing bodies 19, to thereby prevent the strap 10 from coming off unexpectedly.

The slope 18 is reinforced by the reinforcing ribs 18b, and accordingly it becomes possible to prevent deformation such as deflection caused by the strap 10 moving in the slanting direction, and to properly guide the strap 10 along the slope 18.

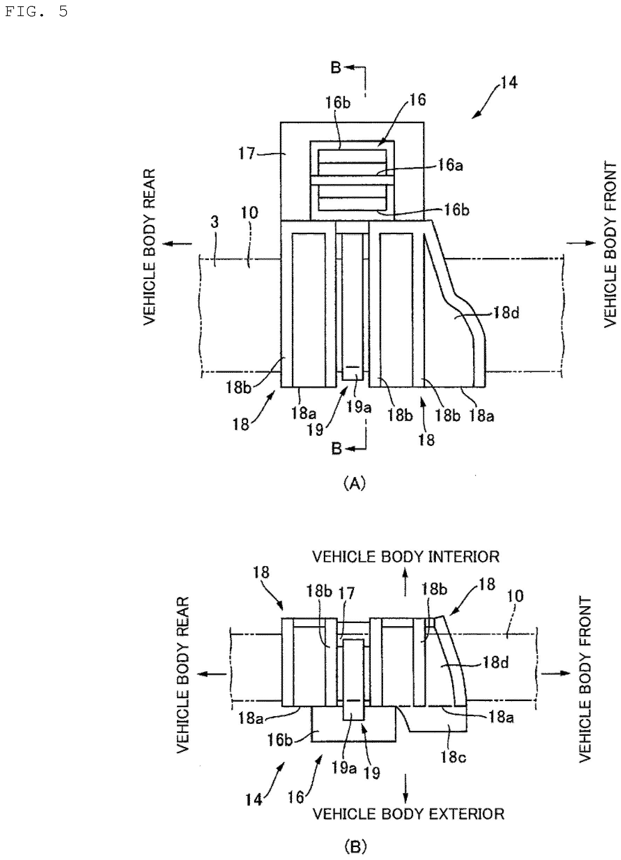

Fig. 5 illustrates a variation of a holding member of a curtain airbag strap. Fig. 5(A) is a front-view diagram and Fig. 5(B) is a bottom-view diagram. In the holding member 14 according to this variation, the cross-section along line arrow B-B in Fig. 5(A) is substantially identical to the configuration of Fig. 4(B). In this variation, the slope 18 is formed as a pair thereof on both sides of a pressing body 19.

As illustrated in Fig. 5(B), an extension 18c is integrally formed at the lower end portions 18a of the slopes 18, the extension 18c being bent with respect to the slopes 18. Herein it suffices that the extension 18c be formed in at least part of the lower end portions 18a of the slope 18. Upon attachment to the vehicle body 1 the extension 18c extends towards the exterior of the vehicle body 1. In the illustrated example, the extension 18c is formed on one of the slopes 18. Needless to say, however, the extension 18c may be formed on both slopes 18.

In the present variation the extension 18c is formed on the slopes 18, and hence it becomes possible to further guide the strap 10 to move towards the exterior of the vehicle body 1, both in terms of time and distance, and to further prevent reliably catching of the strap 10 on for instance the front pillar garnish 7 that faces an occupant seated on a seat, as compared with an instance where the extension 18c is not formed and where the strap 10, having come off from the slope 18, heads immediately into the vehicle body 1. As a result it becomes possible to prevent breaking for instance in that the front pillar garnish 7 flies apart into the vehicle body 1, and to protect the occupant with high safety.

Upon attachment to the vehicle body 1, the extension 13c in the present variation is provided positioned on the frontward side of the vehicle body, in the front-rear direction of the vehicle body. As a result, the strap 10 can be guided reliably towards the exterior of the vehicle body 1, on the front pillar garnish 7 side, and it becomes possible to prevent breaking, for instance in that the front pillar garnish 7 flies apart into the vehicle body 1, yet more properly.

As illustrated in Fig. 5, a slope widened portion 18d is formed integrally with the slopes 18. Upon attachment to the vehicle body 1, the slope widened portion 18d is positioned on at least one of the frontward side and the rearward side in the vehicle body front-rear direction, the slope widened portion 18d being formed so as to gradually widen in the vehicle body front-rear direction towards the lower end portions 18a of the slopes 18. Upon attachment to the vehicle body 1, the slope widened portion 18d in the illustrated example is provided positioned on the frontward side of the vehicle body, in the front-rear direction of the vehicle body. In this implementation the slope widened portion 18d is formed so as to widen gradually towards the front of the vehicle body in the front-rear direction of the vehicle body. The slope widened portion 18d allows increasing the length of the slopes 18 in the vehicle front-rear direction, and allows the strap 10 on the front pillar garnish 7 side to move while being smoothly guided towards the exterior of the vehicle body 1.

The slope widened portion 18d is formed so as to widen gradually. Hence, it becomes possible to prevent the occurrence of unnecessary motion-hindering friction, and to allow the curtain airbag main body 9 to deploy and inflate properly.

In the illustrated example, the extension 18c extends from the lower end portions 18a of both the slope widened portion 18d and the slopes 18. The effect elicited by the extension 18c can be made more pronounced as a result.

In the illustrated example the slope widened portion 18d is formed on only the slope 18 positioned on the frontward side in the vehicle front-rear direction, but needless to say the slope widened portion 18d may be formed also on the slope 18 positioned on the rearward side in the vehicle front-rear direction.

As a matter of course, the effect elicited by such a variation is identical to that of the above embodiments.

The holding member of a curtain airbag strap, vehicle curtain airbag device and installation structure of a vehicle curtain airbag explained above are preferred examples of the present invention, but embodiments other than the foregoing can be implemented or achieved in accordance with various methods. In particular, the invention is not restricted by the shape, size, configurational arrangement and so forth of the detailed parts depicted in the accompanying drawings, unless limiting matter to that effect is set forth in the description of the present application. Further, the expressions and terms used in the description of the present application are explanatory in purpose, and are not meant to be limiting in any way, unless restricting matter to that effect is specifically set forth.

### [Reference Signs List]

- 1: Vehicle body
- 3: Roof side rail
- 4: Front pillar
- 6: Roof garnish
- 6a: Second locking edge section
- 7: Front pillar garnish
- 7a: First locking edge section
- 9: Curtain airbag main body
- 10: Strap
- 11: Joint between roof garnish and front pillar garnish
- 14: Holding member
- 18: Slope
- 18a: Lower end portion of slope
- 18b: Reinforcing ribs
- 18c: Extension
- 18d: Slope widened portion
- 19: Pressing body
- 19a: Locking portion

## Claims

1. An installation structure of a vehicle curtain airbag, which utilizes a holding member (14) of a curtain airbag strap that disengageably holds a strap (10) which connects an end portion of a curtain airbag main body (9) to a pillar of a vehicle body (1), and that can be attached to the vehicle body (1) while holding the strap (10), the holding member (14) comprising:
a slope (18) oriented towards the exterior and the bottom of the vehicle body (1) when attached to the vehicle body (1); wherein the strap (10) can be held on a top face of the slope (18), with the curtain airbag main body (9) in a stored state; and the slope (18) allows guiding, towards the exterior of the vehicle body (1), the strap (10) moving in response to deployment and inflation of the curtain airbag main body (9), the installation structure comprising:
a vehicle body (1) including a front pillar (4) and a roof side rail (3) connected to the front pillar (4);
a front pillar garnish (7) provided in the front pillar (4) so as to cover the front pillar (4) from inside the vehicle body (1), **characterised in that** said front pillar garnish (7) has a first locking edge section (7a) disengageably locked to the front pillar (4);
a roof garnish (6) provided in the roof side rail (3) so as to cover the roof side rail (3) from inside the vehicle body (1), and having a second locking edge section (6a) which, in a form connected to the first locking edge section (7a), is disengageably locked to the roof side rail (3);
a curtain airbag main body (9), provided in a stored state between the roof garnish (6) and the roof side rail (3), and being capable of deploying and inflating towards the bottorn of the vehicle body (1) through disengagement of the second locking edge section (6a) from the roof side rail (3); and
a strap (10) that extends along the front pillar (4), between the front pillar (4) and the front pillar garnish (7), from a front portion, in a vehicle body front-rear direction, of the curtain airbag main body (9) in a stored state, the strap (10) connecting the curtain airbag main body (9) and the front pillar (4),
wherein the strap (10) is disengageably held by the holding member (14) which can be attached to the vehicle body (1) while being positioned at a position covered by at least one of the front pillar garnish (7) and the roof garnish (6).

2. The installation structure of a vehicle curtain airbag according to claim 1, wherein locking between the front pillar (4) and the first locking edge section (7a) of the front pillar garnish (7) is oriented towards the exterior of the vehicle body (1).

3. The installation structure of a vehicle curtain airbag according to claim 1 or 2, wherein an end of the slope (18) is positioned in the vicinity of the first locking edge section (7a) or of the second locking edge section (6a).

4. The installation structure of a vehicle curtain airbag according to any one of claims 1 to 3, wherein the holding member (14) is provided at a joint position (11) of the roof garnish (6) and the front pillar garnish (7), or in the vicinity of the joint position (11).

## Patentansprüche

1. Anbringungsstruktur eines Fahrzeugvorhangairbags, die ein Halteelement (14) eines Vorhangairbagriemens nutzt, das einen Riemen (10), der einen Endabschnitt eines Vorhangairbaghauptkörpers (9) mit einer Säule einer Fahrzeugkarosserie (1) verbindet, lösbar hält, und das an der Fahrzeugkarosserie (1) angebracht werden kann, während der Riemen (10) gehalten wird, wobei das Halteelement (14) Folgendes umfasst:
eine Neigung (18), die nach außen und unten an der Fahrzeugkarosserie (1) ausgerichtet ist, wenn sie an der Fahrzeugkarosserie (1) angebracht ist; wobei der Riemen (10) auf einer oberen Fläche der Neigung (18) gehalten werden kann, wobei sich der Vorhangairbaghauptkörper (9) in einem gelagerten Zustand befindet; und wobei die Neigung (18) es ermöglicht, den Riemen (10), der sich als Reaktion auf ein Auslösen und ein Aufblasen des Vorhangairbaghauptkörpers (9) bewegt, zu der Außenseite der Fahrzeugkarosserie (1) zu führen, wobei die Anbringungsstruktur Folgendes umfasst:
eine Fahrzeugkarosserie (1), einschließlich einer Vordersäule (4) und einer Dachseitenschiene (3), die mit der Vordersäule (4) verbunden ist;
eine Vordersäulenverkleidung (7), die in der Vordersäule (4) bereitgestellt ist, um die Vordersäule (4) von dem Inneren der Fahrzeugkarosserie (1) abzudecken, **dadurch gekennzeichnet, dass** die Vordersäulenverkleidung (7) einen ersten Verriegelungskantenabschnitt aufweist (7a), der an der Vordersäule (4) lösbar verriegelt ist;
eine Dachverkleidung (6), die in der Dachseitenschiene (3) bereitgestellt ist, um die Dachseitenschiene (3) von dem Inneren der Fahrzeugkarosserie (1) abzudecken, und einen zweiten Verriegelungskantenabschnitt (6a) aufweist, der in einer Form, die mit dem ersten Verriegelungskantenabschnitt (7a) verbunden ist, an der Dachseitenschiene (3) lösbar verriegelt ist;
einen Vorhangairbaghauptkörper (9), der in einem zwischen der Dachverkleidung (6) und der Dachseitenschiene (3) gelagerten Zustand bereitgestellt und in der Lage ist, sich in Richtung des Bodens der Fahrzeugkarosserie (1) durch Lösen des zweiten Verriegelungskantenabschnitts (6a) von der Dachseitenschiene (3) auszulösen und aufzublasen; und
einen Riemen (10), der sich entlang der Vordersäule (4), zwischen der Vordersäule (4) und der Vordersäulenverkleidung (7), von einem vorderen Abschnitt, in der Vorwärts-Rückwärts-Richtung der Fahrzeugkarosserie, des Vorhangairbaghauptkörpers (9) in einem gelagerten Zustand erstreckt, wobei der Riemen (10) den Vorhangairbaghauptkörper (9) und die Vordersäule (4) verbindet,
wobei der Riemen (10) durch das Halteelement (14), das an der Fahrzeugkarosserie (1) angebracht werden kann, lösbar gehalten wird, während es in einer Anordnung angeordnet ist, die durch die Vordersäulenverkleidung (7) und/oder die Dachverkleidung (6) verdeckt ist.

2. Installationsstruktur eines Fahrzeugvorhangairbags nach Anspruch 1, wobei die Verriegelung zwischen der Vordersäule (4) und dem ersten Verriegelungskantenabschnitt (7a) der Vordersäulenverkleidung (7) zu der Außenseite der Fahrzeugkarosserie (1) hin ausgerichtet ist.

3. Installationsstruktur eines Fahrzeugvorhangairbags nach Anspruch 1 oder 2, wobei ein Ende der Neigung (18) in der Nähe des ersten Verriegelungskantenabschnitts (7a) oder des zweiten Verriegelungskantenabschnitts (6a) angeordnet ist.

4. Installationsstruktur eines Fahrzeugvorhangairbags nach einem der Ansprüche 1 bis 3, wobei das Halteelement (14) an einer Verbindungsanordnung (11) der Dachverkleidung (6) und der Vordersäulenverkleidung (7) oder in der Nähe der Verbindungsanordnung (11) bereitgestellt ist.

## Revendications

1. Élément de maintien (14) d'une sangle de coussin de sécurité gonflable rideau qui maintient de manière libérable une sangle (10) qui relie une partie d'extrémité d'un corps principal (9) de coussin de sécurité gonflable rideau à un montant de la carrosserie d'un véhicule (1), et qui peut être attaché à la carrosserie du véhicule (1) tout en maintenant la sangle (10), l'élément de maintien (14) comprenant :
une pente (18) orientée vers l'extérieur et le bas de la carrosserie du véhicule (1) lorsqu'elle est attachée à la carrosserie du véhicule (1) ; la sangle (10) pouvant être maintenue sur une face supérieure de la pente (18), le corps principal du coussin de sécurité gonflable rideau (9) étant dans un état rangé ; et la pente (18) permettant de guider, vers l'extérieur de la carrosserie du véhicule (1), la sangle (10) se déplaçant en réponse au déploiement et au gonflage du corps principal de coussin de sécurité gonflable rideau (9), la structure d'installation comprenant :
une carrosserie de véhicule (1) comportant un montant avant (4) et un rail latéral de toit (3) relié au montant avant (4) ;
une garniture de montant avant (7) prévue dans le montant avant (4) de manière à recouvrir le montant avant (4) depuis l'intérieur de la carrosserie du véhicule (1), **caractérisée en ce que** ladite garniture de montant avant (7) présente une première section de bord de verrouillage (7a) verrouillée de manière libérable sur le montant avant (4) ;
une garniture de toit (6) prévue dans le rail latéral de toit (3) de manière à recouvrir le rail latéral de toit (3) depuis l'intérieur de la carrosserie du véhicule (1), et présentant une seconde section de bord de verrouillage (6a) qui, sous une forme reliée à la première section de bord de verrouillage (7a), est verrouillée de manière libérable au rail latéral de toit (3) ;
un corps principal de coussin de sécurité gonflable rideau (9), disposé dans un état rangé entre la garniture de toit (6) et le rail latéral de toit (3), et pouvant se déployer et se gonfler vers le bas de la carrosserie du véhicule (1) à travers la libération de la seconde section de bord de verrouillage (6a) du rail latéral de toit (3) ; et
une sangle (10) qui s'étend le long du montant avant (4), entre le montant avant (4) et la garniture de montant avant (7), depuis une partie avant, dans le sens avant-arrière de la carrosserie du véhicule, du corps principal (9) du coussin de sécurité gonflable rideau dans un état rangé, la sangle (10) reliant le rideau le corps principal (9) de coussin de sécurité gonflable rideau et le montant avant (4),
dans lequel la sangle (10) est maintenue de manière libérable par l'élément de maintien (14) qui peut être attaché à la carrosserie du véhicule (1) tout en étant positionné au niveau d'une position couverte par la garnitures de montant avant (7) et/ou la garniture de toit (6).

2. Structure d'installation d'un coussin de sécurité gonflable rideau d'un véhicule selon la revendication 1, dans laquelle le verrouillage entre le montant avant (4) et la première section de bord de verrouillage (7a) de la garniture de montant avant (7) est orienté vers l'extérieur de la carrosserie du véhicule (1).

3. Structure d'installation d'un coussin de sécurité gonflable rideau de véhicule selon la revendication 1 ou 2, dans laquelle une extrémité de la pente (18) est positionnée à proximité de la première section de bord de verrouillage (7a) ou de la seconde section de bord de verrouillage (6a).

4. Structure d'installation d'un coussin de sécurité gonflable rideau d'un véhicule selon l'une quelconque des revendications 1 à 3, dans laquelle l'élément de maintien (14) est prévu au niveau d'une position d'articulation (11) de la garniture de toit (6) et de la garniture de montant avant (7), ou à proximité de la position d'articulation (11).
